# EUROPEAN PATENT APPLICATION

(11) **EP 3 599 761 A2**
(43) Date of publication of application: **29.01.2020**
(21) Application number: 19185753.1
(22) Date of filing: 11.07.2019
(51) Int. Cl.: H04N 9/31, G01B 11/25

(54) **CONTROL METHOD, MICROPROCESSOR, COMPUTER-READABLE STORAGE MEDIUM, AND COMPUTER PROGRAM**

(30) Priority: 13.07.2018 CN 201810771164
(71) Applicant: GUANGDONG OPPO MOBILE TELECOMMUNICATIONS CORP., LTD., Wusha, Chang'an Dongguan, Guangdong 523860 (CN)
(72) Inventor: ZHOU, Haitao, Dongguan, Guangdong 523860 (CN); HUI, Fangfang, Dongguan, Guangdong 523860 (CN); AU, Kam Wing, Dongguan, Guangdong 523860 (CN); GUO, Ziqing, Dongguan, Guangdong 523860 (CN); TAN, Xiao, Dongguan, Guangdong 523860 (CN)
(74) Representative: Manitz Finsterwald Patent- und Rechtsanwaltspartnerschaft mbB

(57) **Abstract**

It is provided a control method, which belongs to the field of three-dimensional imaging. The control method includes that: brightness of a scene is acquired (01); light emission power of a structured light projector is determined (02) based on the brightness of the scene; and the structured light projector is controlled (03) to emit light at the light emission power. A microprocessor, a computer-readable storage medium, and a computer program are also provided.

## Description

### TECHNICAL FIELD

The present disclosure relates to the technical field of three-dimensional imaging, and particularly to a control method, a microprocessor, a computer-readable storage medium, and a computer program.

### BACKGROUND

A structured light depth camera usually includes a structured light projector and an image acquisition device. The structured light projector projects a diffracted laser pattern into a target space. The image acquisition device shoots a laser pattern obtained by modulating the laser pattern projected by the structured light projector with an object in the target space, and obtains depth information of the object in the target space on the basis of the laser pattern shot by the image acquisition device and a reference pattern. Light emitted by the structured light projector is usually infrared light.

### SUMMARY

The aspects of the present disclosure provide a control method, a microprocessor, a computer-readable storage medium, and a computer program, which can adjust light emission power of a structured light projector based on brightness of a scene.

A first aspect of the disclosure provides a control method, which is applied to a structured light projector, and the control method includes the following operations.

Brightness of a scene is acquired.

Light emission power of the structured light projector is determined based on the brightness of the scene.

The structured light projector is controlled to emit light at the light emission power.

A second aspect of the disclosure provides a microprocessor, which is electrically connected with a structured light depth camera, the structured light depth camera includes a structured light projector, and the microprocessor is configured to:
acquire brightness of a scene,
determine light emission power of the structured light projector based on the brightness of the scene, and
control the structured light projector to emit light at the light emission power.

A third aspect of the disclosure provides a computer-readable storage medium, having a computer program stored thereon, the computer program is executed by a processor to implement the control method in the first aspect of the disclosure.

A fourth aspect of the disclosure provides a computer program including instructions for executing the control method in the first aspect of the disclosure when said program is executed by a computer.

According to the aspects of the disclosure, brightness of a scene is acquired, light emission power of the structured light projector is determined based on the brightness of the scene, and the structured light projector is controlled to emit light at the light emission power. With adoption of the technical solution, the light emission power of the structured light projector can be adjusted based on brightness of the sense, and therefore acquisition accuracy of the depth image can be improved and the power consumption of a computer device can also be reduced.

### BRIEF DESCRIPTION OF DRAWINGS

The abovementioned and/or additional aspects and advantages of the present disclosure will become apparent and easy to understand from the descriptions made to the embodiments below in combination with the drawings.
FIG. 1 illustrates a flowchart of a control method according to some embodiments of the present disclosure.
FIG. 2 illustrates a schematic diagram of some modules of a computer device according to some embodiments of the present disclosure.
FIG. 3 illustrates a flowchart of a control method according to some embodiments of the present disclosure.
FIG. 4 illustrates a flowchart of a control method according to some embodiments of the present disclosure.
FIG. 5 illustrates a structure diagram of a light source of a computer device according to some embodiments of the present disclosure.
FIG. 6 illustrates a structure diagram of a computer device according to some embodiments of the present disclosure.

### DETAILED DESCRIPTION

The embodiments of the present disclosure will be described below in detail. Examples of the embodiments are illustrated in the drawings and the same or similar reference signs always represent the same or similar components or components with the same or similar functions. The embodiments described below with reference to the drawings are exemplary and intended to explain the present disclosure and should not be understood as limits to the present disclosure.

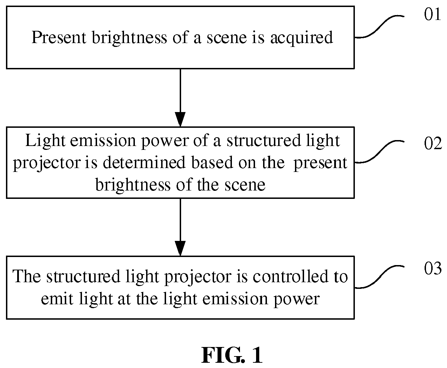

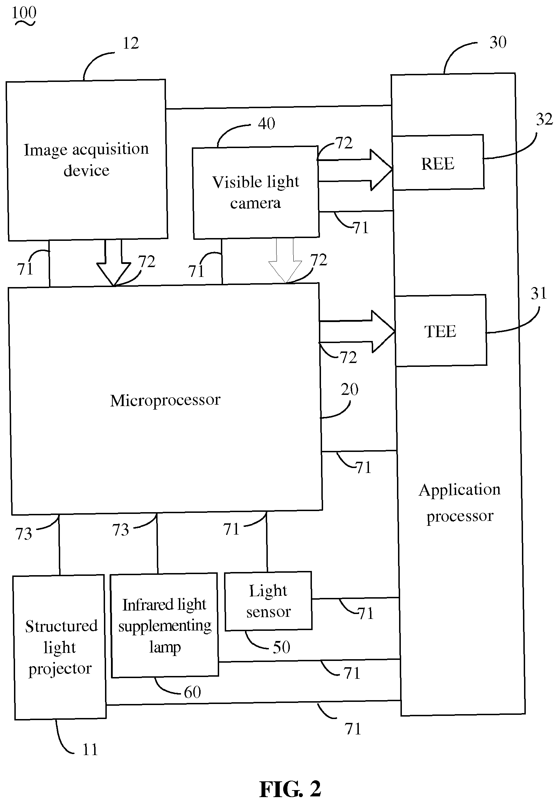

As illustrated in FIG. 1 and FIG. 2, the present disclosure provides a method for controlling a structured light projector 11. The method includes the following operations illustrated in blocks 01 to 03.

At block 01, brightness of a scene is acquired.

At block 02, light emission power of the structured light projector 11 is determined based on the brightness of the scene.

At block 03, the structured light projector 11 is controlled to emit light at the light emission power.

As illustrated in FIG. 2, in some embodiments, the brightness of the scene may be detected by a light sensor 50.

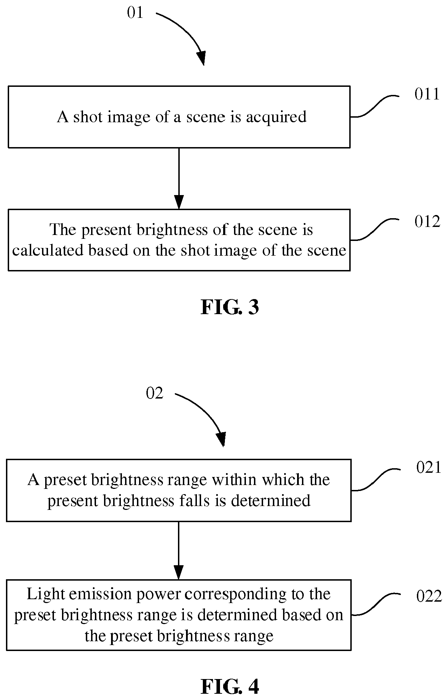

As illustrated in FIG. 3, in some embodiments, the operation 01 of acquiring the brightness of the scene includes the following actions illustrated in blocks 011 and 012.

At block 011, a shot image of the scene is acquired.

At block 012, the brightness of the scene is calculated based on the shot image.

As illustrated in FIG. 4, in some embodiments, there is a preset mapping relationship between light emission power and multiple preset brightness ranges, and each piece of light emission power corresponds to a respective one of the multiple preset brightness ranges, and the block 02 includes the following actions illustrated in blocks 021 and 022.

At block 021, a preset brightness range within which the brightness falls is determined.

At block 022, the light emission power corresponding to the preset brightness range is determined according to the preset mapping relationship.

In some embodiments, the higher the brightness is, the larger the light emission power is.

As illustrated in FIG. 2, the present disclosure also provides a microprocessor 20. The microprocessor 20 is electrically connected with a structured light depth camera 10. The structured light depth camera 10 includes a structured light projector 11. The microprocessor 20 is configured to acquire brightness of a scene, determine light emission power of the structured light projector 11 based on the brightness of the scene and control the structured light projector 11 to emit light at the light emission power.

The present disclosure also provides one or more non-transitory computer-readable storage media including computer-executable instructions. The computer-executable instructions are executed by a processor to enable the processor to execute the following operations: acquiring brightness of a scene, determining light emission power of a structured light projector 11 based on the brightness of the scene and controlling the structured light projector 11 to emit light at the light emission power.

The present disclosure also provides a computer program including instructions for executing a control method, the control method includes that: brightness of a scene is acquired, light emission power of a structured light projector is determined based on the brightness of the scene, and the structured light projector is controlled to emit light at the light emission power.

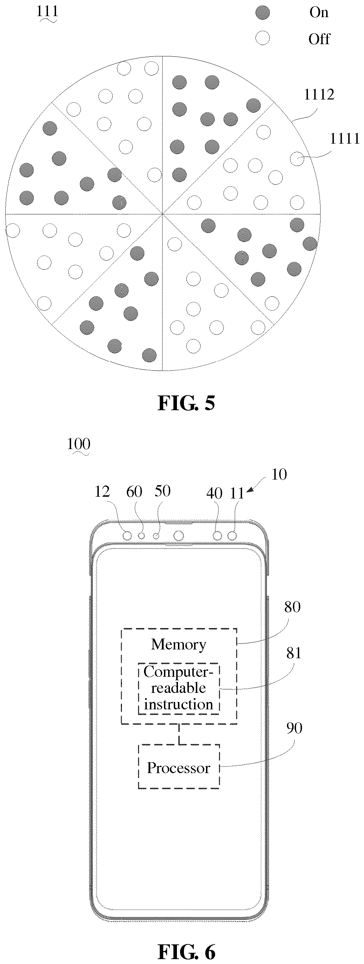

As illustrated in FIG. 6, the present disclosure also provides a computer device 100. The computer device 100 includes a memory 80 and a processor 90. A computer-readable instruction 81 is stored in the memory 80, and the instruction is executed by the processor 90 to enable the processor 90 to execute the following operations: acquiring brightness of a scene, determining light emission power of a structured light projector 11 based on the brightness of the scene and controlling the structured light projector 11 to emit light at the light emission power.

As illustrated in FIG. 1, the present disclosure provides a method for controlling a structured light projector 11. The control method includes the following operations illustrated in blocks 01 to 03.

At block 01, brightness of a scene is acquired.

At block 02, light emission power of the structured light projector 11 is determined based on the brightness of the scene.

At block 03, the structured light projector 11 is controlled to emit light at the light emission power.

As illustrated in FIG. 2, the present disclosure also provides a microprocessor 20. The microprocessor 20 is electrically connected with a structured light depth camera 10. The structured light depth camera includes a structured light projector 11 and an image acquisition device 12. All of block 01, block 02, block 03 may be implemented by the microprocessor 20. That is, the microprocessor 20 may be configured to acquire the brightness of the scene, determine the light emission power of the structured light projector 11 based on the brightness of the scene and control the structured light projector 11 to emit the light at the light emission power.

The microprocessor 20 according to the embodiments of the present disclosure may be applied to a computer device 100 (shown in FIG. 6). Herein, the computer device 100 may be a smart phone, a tablet computer, a notebook computer, a desktop computer, an intelligent wearable device (for example, an intelligent helmet, intelligent glasses, a smart watch and a smart band), a virtual reality device and the like.

The structured light depth camera 10 may acquire depth information of an object in the scene. Specifically, the structured light projector 11 projects a first laser pattern diffracted by a diffraction optical element into the scene, and the image acquisition device 12 acquires a second laser pattern obtained by modulating the first laser pattern projected by the structured light projector with the object. A reference pattern and the modulated laser pattern (i.e., the second laser pattern) may be used to calculate a depth image, and the depth image represents the depth information of the object in the scene. Herein, the laser pattern is usually an infrared laser pattern, and the image acquisition device 12 is usually an infrared camera. When the structured light depth camera 10 is used, infrared light sensed by the image acquisition device 12 not only includes an infrared light component projected by the structured light projector 11 but also includes an infrared light component in ambient light because the ambient light also includes the infrared light component. Therefore, the infrared light component in the ambient light may bring influence to acquisition of the laser pattern by the image acquisition device 12 and further influence acquisition accuracy of the depth information. Particularly when the brightness of the scene is relatively high, a proportion of the infrared light component in the ambient light in the total amount of the infrared light sensed by the image acquisition device 12 is relatively high, and thus acquisition of the laser pattern is influenced more, and the acquisition accuracy of the depth information is lower.

According to the control method of the embodiments of the present disclosure, before the structured light projector 11 is turned on, the brightness of the scene is detected at first, then the light emission power of the structured light projector 11 is determined based on the brightness of the scene, and the microprocessor 20 finally controls the structured light projector 11 to emit the light at the determined light emission power. Herein, a relationship between the light emission power and the brightness is that: if the brightness is higher, the light emission power is higher; and if the brightness is lower, the light emission power is lower. It can be understood that, when the brightness is relatively high, a proportion of the infrared light component in the ambient light sensed by the image acquisition device 12 in the total amount of the infrared light sensed by the image acquisition device 12 is relatively high. In such case, if the light emission power of the structured light projector 11 is increased, and then the infrared light component projected by the structured light projector 11 and sensed by the image acquisition device 12 is increased correspondingly. Thus, a proportion of the infrared light component in the ambient light sensed by the image acquisition device 12 in the total amount of the infrared light sensed by the image acquisition device 12 may be correspondingly decreased, and therefore influence on acquisition of the laser pattern is also correspondingly decreased, and the acquisition accuracy of the depth information is higher. In addition, when the brightness is relatively low, the light emission power is correspondingly decreased, so that power consumption of the computer device 100 may be reduced.

Herein, the light emission power has a lower limit power threshold and the structured light projector 11 should emit the light at power higher than or equal to the power threshold to ensure that the image acquisition device 12 may acquire a laser pattern with enough brightness, so that calculation of the depth information based on the laser pattern is facilitated, and the acquisition accuracy of the depth information is ensured.

As illustrated in FIG. 2 and FIG. 6, the computer device 100 according to the embodiments of the present disclosure includes the structured light depth camera 10, the microprocessor 20 and an application processor 30. The structured light projector 11 is electrically connected with the application processor 30, and the application processor 30 may provide an enabling signal to control the structured light projector 11 to be turned on and turned off. The structured light projector 11 is further electrically connected with the microprocessor 20. The structured light projector 11 may be connected to a pulse width modulation interface 73 of the microprocessor 20. The microprocessor 20 provides a pulse signal for the structured light projector 11 to enable the structured light projector 11 to emit the light and adjust the light emission power of the structured light projector 11 through width modulation of the pulse signal. The image acquisition device 12 is electrically connected with the application processor 30, and the application processor 30 may be configured to control turning-on of the image acquisition device 12, turning-off of the image acquisition device 12 or resetting of the image acquisition device 12. The image acquisition device 12 is further electrically connected with the microprocessor 20. The image acquisition device 20 may be connected with the microprocessor 20 through an inter-integrated circuit (I2C) bus 71. The microprocessor 20 may provide a clock signal for acquisition of the laser pattern for the image acquisition device 12. The laser pattern acquired by the image acquisition device 12 may be transmitted to the microprocessor 20 through a mobile industry processor interface (MIPI) 72. In a specific embodiment of the present disclosure, the computer device 100 further includes an infrared light supplementing lamp 60. The infrared light supplementing lamp 60 may externally emit uniform infrared light, and the infrared light, after being reflected by the object in the scene, is received by the image acquisition device 12 to obtain an infrared image. The infrared light supplementing lamp 60 may also be connected with the application processor 30 through the I2C bus 71, and the application processor 30 may provide an enabling signal for the infrared light supplementing lamp 60 to control the infrared light supplementing lamp to be turned on and turned off. The infrared light supplementing lamp 60 may further be electrically connected with the microprocessor 20. The infrared light supplementing lamp 60 is connected to the pulse width modulation interface 73 of the microprocessor 20. The microprocessor 20 provides a pulse signal for the infrared light supplementing lamp 60 to enable the infrared light supplementing lamp 60 to emit light.

The microprocessor 20 may be a processing chip. The microprocessor 20 is electrically connected with the application processor 30. Specifically, the application processor 30 may be configured for resetting of the microprocessor 20, wakeup of the microprocessor 20, error correction of the microprocessor 20 and the like. The microprocessor 20 may be connected with the application processor 30 through the MIPI 72. Specifically, the application processor 30 includes a trusted execution environment (TEE) 31 and a rich execution environment (REE) 32. Code and memory region in the TEE 31 are controlled by an access control unit, and may not be accessed by a program in the REE 32. The microprocessor 20 is connected with the TEE 31 of the application processor 30 through the MIPI 72 to directly transmit data in the microprocessor 20 to the TEE 31 for storage.

Data in the TEE 31 includes the reference pattern, the laser pattern acquired by the image acquisition device 12, the infrared image acquired by the image acquisition device 12 and the like.

The reference pattern is pre-stored in the TEE 31 before the delivery of the computer device 100.

The microprocessor 20 controls the structured light projector 11 to project a first laser pattern into the scene and controls the image acquisition device 12 to acquire a second laser pattern obtained by modulating the first laser pattern projected by the structured light projector with the object in the scene. Then, the microprocessor 20 acquires the modulated laser pattern (i.e., the second laser pattern) through the MIPI 72 and transmits the modulated laser pattern to the TEE 31 of the application processor 30 through the MIPI 72 between the microprocessor 20 and the application processor 30. The application processor 30 may calculate the depth image on the basis of the reference pattern and the modulated laser pattern. Some depth images may be determined as depth templates, and identity authentication of a user may be performed on the basis of the depth templates. After the user passes identity authentication, operation rights, for example, screen unlocking and payment, over the computer device 100 may be obtained. The depth image may further be used for three-dimensional scene modeling and the like.

The microprocessor 20 may further control the infrared light supplementing lamp 60 to project the uniform infrared light into the scene and control the image acquisition device 12 to acquire the infrared image. Then, the microprocessor 20 acquires the infrared image through the MIPI 72 and transmits the infrared image to the TEE 31 of the application processor 30 through the MIPI 72 between the microprocessor 20 and the application processor 30. Some infrared images may be determined as infrared templates. For example, an infrared image including a user face may be determined as a face infrared template, and two-dimensional face verification and the like may be performed on the basis of the face infrared template.

From the above, according to the control method and microprocessor 20 of the embodiments of the present disclosure, the light emission power of the structured light projector 11 may be adjusted based on the brightness of the scene, so that the acquisition accuracy of the depth image may be improved on one hand, and on the other hand, the power consumption of the computer device 100 may be reduced.

In some embodiments, the microprocessor 20 further includes a TEE. Data in the TEE of the microprocessor includes the reference pattern, the laser pattern acquired by the image acquisition device 12, the infrared image acquired by the image acquisition device 12 and the like. The reference pattern is pre-stored in the TEE of the microprocessor before the delivery of the computer device 100. The microprocessor 20, after receiving the laser pattern from the image acquisition device 12, stores the laser pattern in the TEE of the microprocessor 20. The microprocessor 20 may calculate the depth image on the basis of the reference pattern and the laser pattern. The depth image including depth information of a face may be determined as a depth template, and the microprocessor 20 transmits the depth template to the TEE 31 of the application processor 30 for storage through the MIPI 72. During subsequent identity authentication, the microprocessor 20 transmits the calculated depth image to the application processor 30, and the application processor 30 compares the depth image and the depth template and schedules various processes with an identity authentication requirement on the basis of a comparison result. Similarly, the microprocessor 20, after receiving the infrared image from the image acquisition device 12, stores the infrared image in the TEE of the microprocessor 20. An infrared image including the face may be determined as an infrared template, and the microprocessor 20 may transmit the infrared template to the TEE 31 of the application processor 30 for storage through the MIPI 72. During subsequent identity authentication, the microprocessor 20 transmits the acquired infrared image to the application processor 30, and the application processor 30 compares the infrared image and the infrared template and schedules various processes with the identity authentication requirement on the basis of a comparison result.

In some embodiments, the reference pattern is stored in the microprocessor 20. The microprocessor 20, after receiving the laser pattern from the image acquisition device 12, may transmit both of the reference pattern and the laser pattern to the TEE 31 of the application processor 30 for storage through the MIPI 72. The application processor 30 may calculate the depth image on the basis of the reference pattern and the laser pattern. Herein, the application processor 30 calculates the depth image in the TEE 31, and the calculated depth image is also stored in the TEE 31. Some depth images stored in the TEE 31 of the application processor 30 may be determined as depth templates. During subsequent identity authentication, the application processor 30 calculates the depth image, compares the calculated depth image and the depth template and further schedules various processes with the identity authentication requirement on the basis of a comparison result. Similarly, the microprocessor 20, after receiving the infrared image from the image acquisition device 12, may transmit the infrared image to the TEE 31 of the application processor 30 for storage through the MIPI 72. Some infrared images stored in the TEE 31 of the application processor 30 may be determined as infrared templates. During subsequent identity authentication, the application processor 30 compares the infrared image received from the microprocessor 20 and the infrared template and further schedules various processes with the identity authentication requirement on the basis of a comparison result.

As illustrated in FIG. 2, in some embodiments, the brightness of the scene may be detected by a light sensor 50. The light sensor 50 is an external device, and is electrically connected to the microprocessor 20. Specifically, the light sensor may be electrically connected with the microprocessor 20 through the I2C bus 71. The light sensor 50 may further be electrically connected with the application processor 30, and specifically, may be electrically connected with the application processor 30 through the I2C bus 71. The application processor 30 may provide an enabling signal for the light sensor 50 to control the light sensor to be turned on and turned off. The light sensor 50 includes two components, i.e., a light projector and a light receiver. The working principle of the light sensor is that light is focused through a lens of the light projector, and the light is transmitted to a lens of the light receiver, and is finally received by an inductor. The inductor converts a received light signal into an electric signal. The electric signal is transmitted to the microprocessor 20, and the microprocessor 20 determines the brightness of the scene according to a magnitude of the electric signal and finally determines the light emission power of the structured light projector 11 on the basis of the brightness of the scene.

As illustrated in FIG. 3, in some embodiments, the operation 01of acquiring the brightness of the scene includes the following actions illustrated in blocks 011 and 012.

At block 011, a shot image of the scene is acquired.

At block 012, the brightness of the scene is calculated based on the shot image.

As illustrated in FIG. 2, in some embodiments, both of block 011 and block 012 may be implemented by the microprocessor 20. That is, the microprocessor 20 may further be configured to acquire the shot image of the scene and calculate the brightness of the scene based on the shot image.

Herein, the shot image of the scene may be acquired by the image acquisition device 12. In such case, the shot image is a gray-scale image. A pixel value of the gray-scale image reflects brightness at each position in the scene, and the microprocessor 20 may calculate the brightness of the scene based on the pixel values of the gray-scale image, for example, summing pixel values of the whole gray-scale image and then calculating a mean value. The brightness of the scene may be calculated on the basis of the shot image, so that no light sensor 50 is required to be arranged, and the number of peripherals of the computer device 100 is reduced.

In some embodiments, the computer device 100 further includes a visible light camera 40. The visible light camera 40 is connected with the application processor 30. Specifically, the visible light camera 40 may be connected with the application processor 30 through the I2C bus 71. The application processor 30 may provide an enabling signal for the visible light camera 40 to turn on or turn off the visible light camera 40 or reset the visible light camera 40. The visible light camera 40 is further electrically connected with the microprocessor 20. Specifically, the visible light camera 40 may be connected with the microprocessor 20 through the I2C bus 71, the microprocessor 20 may provide a clock signal for shooting a visible light image for the visible light camera 40, and the visible light image shot by the visible light camera 40 may be transmitted to the microprocessor 20 through the MIPI 72. The microprocessor 20 may further transmit the visible light image to the REE 32 of the application processor 30 through the MIPI 72, and the application processor 30 may perform three-dimensional modeling on the scene based on the depth image and the visible light image to obtain a three-dimensional color model of the scene and the like or perform face retouching based on the depth image and the visible light image. Specifically, the application processor 30 may recognize pixels corresponding to a face in the visible light image more accurately and then retouch the face to improve a face retouching effect and the like. When the microprocessor 20 also includes the TEE and an REE, three-dimensional scene modeling, face retouching and the like may also be executed by the microprocessor 20.

Herein, the shot image may also be the visible light image shot by the visible light camera 40. Pixel values of the visible light image are usually data in a red, green and blue (RGB) format, and the microprocessor 20, after receiving the visible light image, calculates a value of a brightness component Y in a YCrCb format at first on the basis of the pixel values of the RGB format according to the following formula: Y=0.257×R+0.564×G+0.098×B. Then, the microprocessor 20 may calculate the brightness of the scene based on multiple Y values of the whole visible light image, for example, summing the multiple Y values and then calculating a mean value, and determines a final result as the brightness of the scene.

As illustrated in FIG. 4, in some embodiments, there is a preset mapping relationship between light emission power and multiple preset brightness ranges, and each piece of light emission power corresponds to a respective one of the multiple preset brightness ranges. The operation 02 of determining the light emission power of the structured light projector 11 according to the brightness of the scene includes the following actions illustrated in blocks 021 and 022.

At block 021, a preset brightness range within which the brightness falls is determined.

At block 022, the light emission power corresponding to the preset brightness range is determined based on the preset mapping relationship.

As illustrated in FIG. 2, in some embodiments, both of block 021 and block 022 may be implemented by the microprocessor 20. That is, the microprocessor 20 may further be configured to determine the preset brightness range within which the brightness falls and determine the light emission power corresponding to the preset brightness range based on the preset brightness range.

Specifically, a corresponding table for the preset brightness ranges and the light emission power is pre-stored in the microprocessor 20, each preset brightness range corresponds to a piece of light emission power. The microprocessor 20, after calculating the brightness of the scene, determines the specific preset brightness range within which the brightness of the scene falls at first, after determining the preset brightness range, searches the corresponding table for the light emission power corresponding to the preset brightness range within which the brightness falls and controls the structured light projector 11 to emit the light at the determined light emission power. Herein, the corresponding table for the preset brightness ranges and the light emission power is obtained by experimental calibration in a manufacturing process of the computer device 100.

According to the control method of the embodiments of the present disclosure, the multiple preset brightness ranges are divided, each piece of the light emission power corresponding to a respective one of the multiple preset brightness ranges is set. When the structured light depth camera 10 works, the microprocessor 20 may determine the light emission power matched best with the brightness according to the corresponding table, so that the acquisition accuracy of the depth image may be improved on one hand, and the power consumption of the computer device 100 may be reduced.

In some embodiments, the light emission power may be controlled not only by changing a duty ratio and amplitude of a pulse signal but also by performing partition control on a light source 111 of the structured light projector 11. In such case, the light source 111 is divided into multiple light emission regions 1112, each light emission region 1112 includes multiple point light sources 1111. The point light sources in each of the multiple light emission regions 1112 may be independently controlled with respect to the point light sources in other light emission regions. After the light emission power is determined, the number of the light emission regions 1112 in which the point light sources are required to be turned on and positions of these light emission regions 1112 are determined on the basis of the light emission power. For example, in FIG. 5, the light source 111 is divided into eight light emission regions 1112, if it is determined on the basis of the determined light emission power that point light sources in four light emission regions 1112 are required to be turned on, i.e., the four light emission regions 1112 illustrated in FIG. 5. The four light emission regions 1112 are centrosymmetrically distributed around a center point of the light source 101, so that uniformity of brightness of the laser pattern projected into the scene by the structured light projector 11 may be improved, and further the acquisition accuracy of the depth image is improved.

Herein, a shape of the light source 111 may be a triangle, a rectangle, a square, a parallelogram, a polygon and the like, besides a round shown in FIG. 5, and is not limited herein. The light emission regions 1112 may be distributed in a ring, a hollow square and the like, besides a sector shown in FIG. 5, and is not limited herein.

As illustrated in FIG. 6, the present disclosure also provides a computer device 100. The computer device 100 includes a memory 80 and a processor 90. A computer-readable instruction 81 is stored in the memory 80. The instruction is executed by the processor 90 to enable the processor 90 to execute the control method of any embodiment. Herein, the processor 90 in the computer device 100 may be the microprocessor 20.

For example, when the instruction is executed by the processor 90, the processor 90 may execute the following operations illustrated in blocks 01 to 03.

At block 01, brightness of a scene is acquired.

At block 02, light emission power of the structured light projector 11 is determined according to the brightness of the scene.

At block 03, the structured light projector 11 is controlled to emit light at the light emission power.

For another example, when the instruction is executed by the processor 90, the processor 90 may further execute the following operations illustrated in blocks 011 and 012.

At block 011, a shot image of the scene is acquired.

At block 012, the brightness of the scene is calculated based on the shot image.

For another example, when the instruction is executed by the processor 90, the processor 90 may further execute the following operations illustrated in blocks 021 and 022.

At block 021, a preset brightness range within which the brightness of the scene falls is determined.

At block 022, the light emission power corresponding to the preset brightness range is determined according to the preset brightness range.

The present disclosure also provides one or more non-transitory computer-readable storage media including computer-executable instructions, the computer-executable instructions being executed by one or more processors 90 to enable the one or more processors 90 to execute the control method of any embodiment. Herein, the processor 90 may be the microprocessor 20.

For example, when the computer-executable instructions are executed by the one or more processors 90, the processors 90 may execute the following operations illustrated in blocks 01 to 03.

At block 01, brightness of a scene is acquired.

At block 02, light emission power of the structured light projector 11 is determined based on the brightness.

At block 03, the structured light projector 11 is controlled to emit light at the light emission power.

For another example, when the computer-executable instructions are executed by the one or more processors 90, the processors 90 may execute the following operations illustrated in blocks 011 and 012.

At block 011, a shot image of the scene is acquired.

At block 012, the brightness of the scene is calculated based on the shot image.

For another example, when the computer-executable instructions are executed by the one or more processors 90, the processors 90 may further execute the following operations illustrated in blocks 021 and 022.

At block 021, a preset brightness range within which the brightness of the scene falls is determined.

At block 022, the light emission power corresponding to the preset brightness range is determined according to the preset brightness range.

The present disclosure also provides a control device, which is electrically connected with a structured light depth camera. Herein, the structured light depth camera includes a structured light projector, the control device includes a controller and a memory, and the memory stores a computer-readable instruction, which, when executed by the controller, cause the controller to: acquire brightness of a scene; determine light emission power of the structured light projector based on the brightness of the scene; and control the structured light projector to emit light at the light emission power.

In some embodiments, the brightness of the scene may be detected by a light sensor.

In some embodiments, the controller may be further configured to: acquire a shot image of the scene; and calculate the brightness of the scene based on the shot image.

In some embodiments, the memory may be further configured to store a preset mapping relationship between the light emission power and multiple preset brightness ranges. Herein, each piece of light emission power corresponds to a respective one of multiple preset brightness ranges. The controller may be further configured to: determine a preset brightness range within which the brightness of the scene falls; and determine the light emission power corresponding to the preset brightness range according to the preset mapping relationship.

In some embodiments, the controller may be further configured to: control the structured light projector to project a first laser pattern into the scene; control an image acquisition device to acquire a second laser pattern, the second laser pattern is obtained by modulating the first laser pattern with the scene, and the controller is electrically connected to the image acquisition device; acquire the second laser pattern; and transmit the second laser pattern to an application processor to enable the application processor to calculate a depth image of the scene based on the second laser pattern and a reference pattern, here, the controller is electrically connected to the application processor.

In some embodiments, the controller may be further configured to: control an infrared light supplementing lamp to project uniform infrared light to the scene, here, the controller is electrically connected to the infrared light supplementing lamp; control an image acquisition device to acquire an infrared image of the scene, here the controller is electrically connected to the image acquisition device; acquire the infrared image of the scene from the image acquisition device; and transmit the infrared image of the scene to an application processor to enable the application processor to execute user identity authentication based on the infrared image of the scene and an infrared template; here, the controller is electrically connected to the application processor.

In some embodiments, the controller may be further configured to: control a visible light camera to capture a visible light image of the scene, the controller is electrically connected to the visible light camera; acquire the visible light image of the scene form the visible light camera; and transmit the visible light image of the scene to an application processor to enable the application processor to perform three-dimensional modeling on the scene based on the visible light image of the scene, the controller is electrically connected to the application processor.

In some embodiments, a light source of the structured light projector may be divided into a plurality of light emission regions, and each of the plurality of light emission regions comprises a plurality of point light sources. Point light sources in each of the plurality of light emission regions are independently controlled with respect to point light sources in other light emission regions. Light emission regions in which point light sources have been turned on are distributed centrosymmetrically around a center point of the light source.

In some embodiments, the control device may be a microprocessor.

In the descriptions of the specification, the descriptions made with reference to terms "an embodiment", "some embodiments", "example", "specific example", "some examples" or the like refer to that specific features, structures, materials or characteristics described in combination with the embodiment or the example are included in at least one embodiment or example of the present disclosure. In the specification, these terms are not always schematically expressed for the same embodiment or example. Moreover, the specific described features, structures, materials or characteristics may be combined in a proper manner in any one or more embodiments or examples. In addition, those skilled in the art may integrate and combine different embodiments or examples described in the specification and features of different embodiments or examples without conflicts.

In addition, terms "first" and "second" are only adopted for description and should not be understood to indicate or imply relative importance or implicitly indicate the number of indicated technical features. Therefore, a feature defined by "first" and "second" may explicitly or implicitly indicate inclusion of at least one such feature. In the descriptions of the present disclosure, "multiple" means at least two, for example, two and three, unless otherwise limited definitely and specifically.

Any process or method in the flowcharts or described herein in another manner may be understood to represent a module, segment or part including codes of one or more executable instructions configured to realize specific logic functions or operations of the process and, moreover, the scope of the preferred embodiment of the present disclosure includes other implementation, not in a sequence shown or discussed herein, including execution of the functions basically simultaneously or in an opposite sequence according to the involved functions. This should be understood by those skilled in the art of the embodiments of the present disclosure.

Logics and/or operations represented in the flowcharts or described herein in another manner, for example, may be considered as a fixed sequence list of executable instructions configured to realize the logic functions and may specifically implemented in any computer-readable medium for an instruction execution system, device or equipment (for example, a computer-based system, a system including a processor or another system capable of reading instructions from the instruction execution system, device or equipment and executing the instructions) to use or for use in combination with the instruction execution system, device or equipment. For the specification, "computer-readable medium" may be any device capable of including, storing, communicating with, propagating or transmitting a program for the instruction execution system, device or equipment to use or for use in combination with the instruction execution system, device or equipment. A more specific example (non-exhaustive list) of the computer-readable medium includes: an electric connection portion (electronic device) with one or more wires, a portable computer disk (magnetic device), a Random Access Memory (RAM), a Read-Only Memory (ROM), an Erasable Programmable ROM (EPROM) (or flash memory), an optical fiber device and a portable Compact Disc Read-Only Memory (CD-ROM). In addition, the computer-readable medium may even be paper or another medium on which the program may be printed because, for example, the paper or the other medium may be optically scanned then edited, explained or, when necessary, processed in another proper manner to obtain the program in an electronic manner for storage in the computer memory.

It should be understood that each part of the present disclosure may be implemented by hardware, software, firmware or a combination thereof. In the abovementioned embodiments, multiple operations or methods may be implemented by software or firmware stored in a memory and executed by a proper instruction execution system. For example, in case of implementation with the hardware, like another embodiment, any one or combination of the following technologies well-known in the art may be adopted for implementation: a discrete logic circuit with a logic gate circuit configured to realize a logic function for a data signal, an application-specific integrated circuit with a proper combined logic gate circuit, a Programmable Gate Array (PGA), a Field Programmable Gate Array (FPGA) and the like.

Those of ordinary skill in the art should understand that all or part of the operations in the method of the abovementioned embodiment may be completed through related hardware instructed by a program, the program may be stored in a computer-readable storage medium, and when the program is executed, one or combination of the operations of the method embodiment is included.

In addition, each functional unit in each embodiment of the present disclosure may be integrated into a processing module, each unit may also physically exist independently, and two or more than two units may also be integrated into a module. The integrated module may be implemented in a hardware form and may also be implemented in form of software functional module. When being implemented in form of software functional module and sold or used as an independent product, the integrated module may be stored in a computer-readable storage medium.

The storage medium may be a ROM, a magnetic disk, an optical disk or the like. The embodiments of the present disclosure have been shown or described above. However, it can be understood that the abovementioned embodiments are exemplary and should not be understood as limits to the present disclosure and those of ordinary skill in the art may make variations, modifications, replacements, transformations to the abovementioned embodiments within the scope of the present disclosure.

## Claims

1. A control method, executed by a structured light projector, **characterized by** comprising:
acquiring (01) brightness of a scene;
determining (02) light emission power of the structured light projector based on the brightness of the scene; and
controlling (03) the structured light projector to emit light at the light emission power.

2. The control method of claim 1, wherein the brightness of the scene is detected by a light sensor (50).

3. The control method of claim 1, wherein acquiring (01) the brightness of the scene comprises:
acquiring (011) a shot image of the scene; and
calculating (012) the brightness of the scene based on the shot image of the scene.

4. The control method of claim 1, wherein the method further comprises:
presetting a mapping relationship between the light emission power and multiple preset brightness ranges, wherein each piece of the light emission power corresponds to a respective one of the multiple preset brightness ranges, and
wherein determining (02) the light emission power of the structured light projector based on the brightness of the scene comprises:
determining (021) a preset brightness range within which the brightness of the scene falls; and
determining (022) the light emission power corresponding to the preset brightness range according to the preset mapping relationship.

5. The control method of claim 1, wherein the higher the brightness of the scene is, the higher the light emission power is.

6. The control method of claim 3, wherein calculating the brightness of the scene based on the shot image of the scene comprises:
calculating an average of pixel values of the shot image of the scene to obtain the brightness of the scene.

7. A microprocessor (20), electrically connected with a structured light depth camera (10), wherein the structured light depth camera (10) comprises a structured light projector (11), the microprocessor (20) is configured to:
acquire brightness of a scene;
determine light emission power of the structured light projector based on the brightness of the scene; and
control the structured light projector to emit light at the light emission power.

8. The microprocessor of claim 7, wherein the brightness of the scene is detected by a light sensor (50).

9. The microprocessor of claim 7, wherein the microprocessor is further configured to:
acquire a shot image of the scene; and
calculate the brightness of the scene based on the shot image.

10. The microprocessor of claim 7, wherein the light emission power has a preset mapping relationship with multiple preset brightness ranges, each piece of light emission power corresponds to a respective one of multiple preset brightness ranges, and
wherein the microprocessor is further configured to:
determine a preset brightness range within which the brightness of the scene falls; and
determine the light emission power corresponding to the preset brightness range according to the preset mapping relationship.

11. The microprocessor of claim 7, wherein the higher the present brightness of the scene is, the higher the light emission power is.

12. The microprocessor of claim 9, wherein when calculating the brightness of the scene based on the shot image of the scene, the microprocessor is further configured to:
calculate an average of pixel values of the shot image of the scene to obtain the brightness of the scene.

13. The microprocessor of claim 7, wherein a light source (111) of the structured light projector (11) is divided into a plurality of light emission regions (1112), each of the plurality of light emission regions comprises a plurality of point light sources (1111), and point light sources in each of the plurality of light emission regions are independently controlled with respect to point light sources in other light emission regions; and
wherein light emission regions in which point light sources have been turned on are distributed centrosymmetrically around a center point of the light source.

14. A computer-readable storage medium, having a computer program stored thereon, wherein the computer program is executed by a processor to implement the control method of any one of claims 1 to 6.

15. A computer program including instructions for executing the control method of any one of claims 1 to 6 when said program is executed by a computer.
